# FASCICULE DE BREVET EUROPEEN

(11) **EP 1 465 783 B1**
(45) Date de publication et mention de la délivrance du brevet: **29.03.2006**
(21) Numéro de dépôt: 02806304.8
(22) Date de dépôt: 15.01.2002
(51) Int. Cl.: B60G 17/02, B60G 3/14, B60K 1/02

(54) **VEHICULE ROUTIER ELECTRIQUE, NOTAMMENT AUTOMATIQUE**
ELEKTRISCHES STRASSENFAHRZEUG, INSBESONDERE AUTOMATISCHES FAHRZEUG
ELECTRIC ROAD VEHICLE, PARTICULARLY AUTOMATIC VEHICLE

(43) Date de publication de la demande: 13.10.2004
(73) Titulaire: Saugy, Bernard, 1020 Renens (CH)
(72) Inventeur: Saugy, Bernard, 1020 Renens (CH)
(74) Mandataire: Nithardt, Roland
(86) Numéro de dépôt international: PCT/CH2002/000025
(87) Numéro de publication internationale: WO 2003/059662

(56) Documents cités:
- EP-A- 0 681 939
- DE-A- 19 933 053
- DE-C- 19 933 051
- GB-A- 2 199 794
- US-A- 4 089 542
- US-B1- 6 267 196
- PATENT ABSTRACTS OF JAPAN vol. 010, no. 357 (M-540), 2 décembre 1986 (1986-12-02) & JP 61 155009 A (NISSAN MOTOR CO LTD), 14 juillet 1986 (1986-07-14)

## Description

L'invention a pour objet un véhicule routier électrique, notamment automatique, comportant quatre roues, une carrosserie présentant des portes et un dispositif permettant d'abaisser le plancher de la carrosserie jusqu'au sol en position d'arrêt et de le maintenir à une certaine distance du sol en position de déplacement ou de marche. On entend par véhicule automatique un véhicule se déplaçant seul, c'est-à-dire sans conducteur. Ce véhicule est notamment destiné à faire partie d'un ensemble de véhicules automatiques routiers urbains recevant l'énergie par des dispositifs électromagnétiques comme décrit dans le brevet EP 681939.

On connaît des véhicules ferroviaires automatiques, par exemple des métros, qui fonctionnent comme des « ascenseurs horizontaux ». Si pour ce genre de véhicules il n'y a pratiquement pas de problème de les freiner et de les maintenir à l'arrêt, il n'en n'est pas de même pour les véhicule automatiques routiers. En effet, un véhicule routier a plus de liberté qu'il soit automatique ou non qu'un véhicule ferroviaire. De plus, il est plus facile de faire s'arrêter un véhicule ferroviaire toujours aux mêmes endroits d'une manière automatique que de faire s'arrêter un véhicule routier et de le maintenir arrêter de manière à permettre aux usagés de l'utiliser en toute sécurité ceci à n'importe quel endroit. Enfin, il est aussi beaucoup plus facile de prévoir pour les véhicules ferroviaires des quais ayant une hauteur déterminée de manière à permettre l'entrée dans le véhicule sans avoir à monter une ou plusieurs marches, que pour un véhicule routier, ceci afin de permettre une entrée facile pour les personnes handicapées.

Le problème de l'entrée dans les véhicules routiers a déjà été résolu pour des véhicules tractés notamment des remorques ou des vans. On consultera par exemple le document FR 2654990, dans lequel il est décrit une suspension destinée à permettre le pivotement des roues en vue de reposer le châssis du véhicule sur le sol.

Dans le document EP 319436, il est décrit un dispositif permettant d'abaisser l'arrière d'un véhicule pour l'amener au niveau du scl, ceci notamment pour le transport de personnes handicapées utilisant des fauteuils roulants.

Le document US 4900055 décrit une suspension hydraulique rétractable des roues d'une caravane, notamment d'une caravane destinée à la vente de produits alimentaires, par exemple de frittes ou des saucisses. Le but de l'invention décrite dans ce document est de fournir un véhicule tractable qui puisse être placé à un endroit de manière stable, pour cela il est prévu une suspension rétractable permettant aux roues de s'escamoter de manière à poser la caisse ou carrosserie du véhicule sur le sol.

Dans toutes les inventions décrites dans les documents cités ci-dessus l'abaissement du plancher du véhicule se fait par escamotage des roues au moyen de vérins hydrauliques. Ces dispositifs sont relativement compliqués et lents, ils ne pourraient pas être utilisés pour un véhicule de transport en commun routier automatique à action relativement rapide. US 6267196 montre un véhicule pour environnement à basse pesenteur selon le préambule de la revendication 1.

L'invention a pour buts de fournir un véhicule autonome routier électrique, notamment automatique présentant un grande facilité d'utilisation pour tout usagé y compris les personnes handicapées et une haute sécurité aussi bien en marche qu'à l'arrêt

Ces buts sont atteints avec le véhicule automatique routier électrique, notamment automatique défini à la revendication 1.

L'invention sera mieux comprise, ses caractéristiques et ses avantages apparaîtront plus clairement à la lecture de la description de formes d'exécution donnée à titre d'exemple en regard des dessins sur lesquels :
La figure 1 représente une vue schématique en perspective d'une première forme d'exécution.
La figure 2 représente une vue schématique en plan d'une deuxième forme d'exécution.
La figure 3 représente une vue latérale schématique de la forme d'exécution de la figure 2 en position d'arrêt.
La figure 4 représente la même vue latérale schématique que celle de la figure 3 mais en position de marche.
La figure 5 représente une vue schématique complète en plan de la forme d'exécution représentée à la figure 2 faisant mieux apparaître la manière dont les roues peuvent être orientées.

Afin simplifier les figures et pour bien faire apparaître les analogies entre les différentes formes d'exécution des signes de référence identiques ont été utilisés pour désigner les mêmes caractéristiques dans toutes les formes d'exécution décrites.

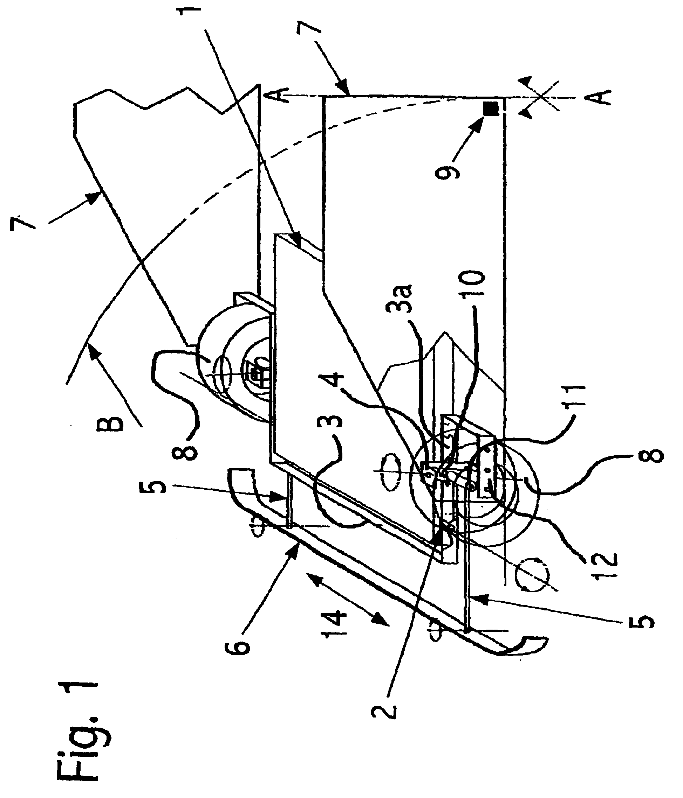

Comme on le voit sur la figure 1, qui représente en perspective schématiquement la moitié d'un véhicule selon l'invention, l'autre moitié étant symétrique selon l'axe A-A, un véhicule selon l'invention comporte un plancher 1. Sur ledit plancher 1 sont disposés des axes 2 autour desquelles est articulé un élément 3 sensiblement en forme de U dont les branches 3a sont retournées pour formés des supports 12. Sur les supports 12 sont fixées les portes 7 dessinées en position fermées, c'est à-dire en position de marche, et bloquées dans cette position par un système de verrouillage 9 connu en-soi. La ligne 13 matérialise la trajectoire de la porte lorsqu'elle passe en position ouverte. Sur les branches 3a de l'élément 3 en U sont fixées des pièces 4 dans lesquelles sont disposées des pièces 10 pouvant tourner autour d'axes verticaux Aux pièces 10 sont fixés des axes 11 sur lesquels sont fixés des moteurs (non représentés) destinés à mettre en rotation les roues 8. Sur les pièces 11 sont aussi fixées des barres 5 articulées sur un pare-chocs 6 assurant le guidage par un mouvement indiqué par la flèche 14, par une crémaillère commandée par une barre de direction (non représentée) ou par des vitesses différentielles des moteurs des roues 8.

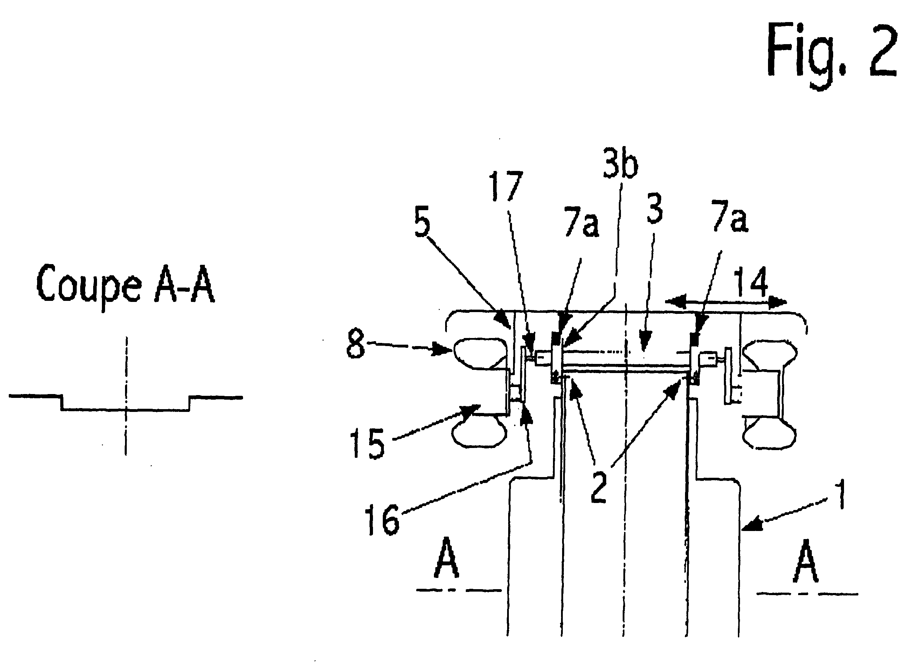

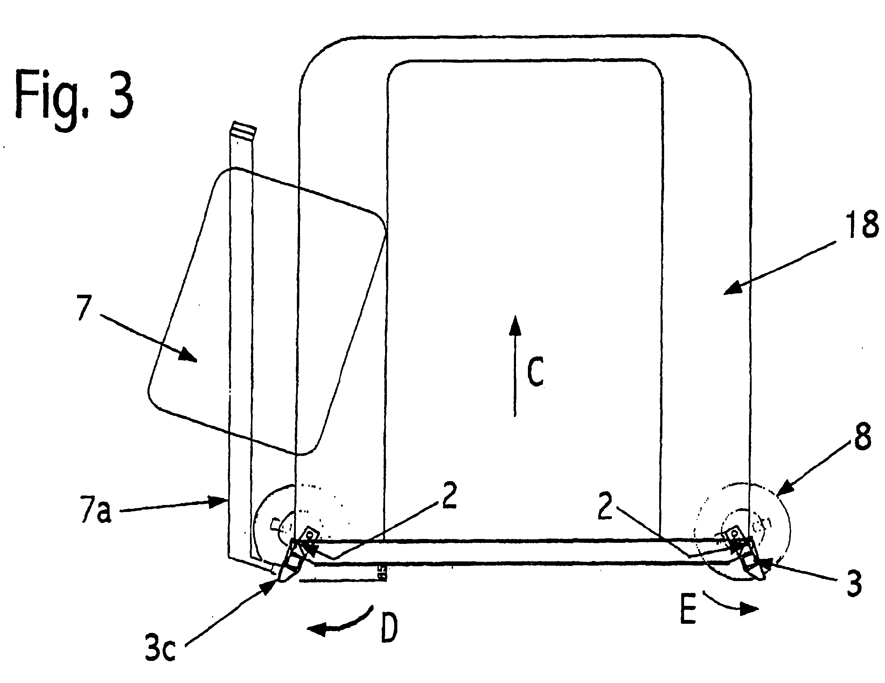

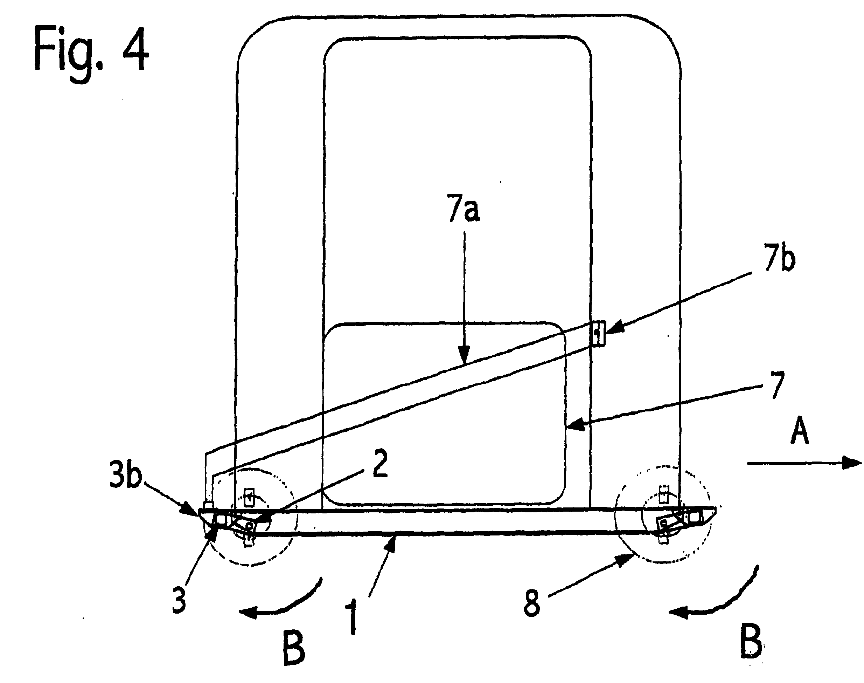

La figure 2 représente une variante de la forme d'exécution définie à la figure 1. Dans cette exécution l'élément 3 est constitué par une barre rectiligne, par exemple un tube carré, sur laquelle sont fixées perpendiculairement deux pattes 3b, une des extrémités de chaque patte est articulée sur le châssis 1 autour de l'axe 2, et à l'autre extrémité est fixé une barre 7a destinée à supporter la porte (voir figures 3 et 4). La barre 7a est aussi utilisée pour verrouiller les portes en position fermée ou de marche sur la carrosserie 18 au moyen d'un système de blocage adéquat 7b à la portée des possibilités de l'homme du métier. A chaque extrémité des barres 3 sont disposées des suspensions élastiques 17, par exemple du genre « ROSTA » (marque déposée), présentant un bras 16 à l'extrémité duquel est fixé un moteur 15 destiné à mettre en rotation la roue 8. Le moteur 15 est lui-même fixé sur le bras 16 au moyen d'un dispositif permettant un rotation autour d'un axe vertical afin d'assurer la direction du véhicule.

Le fonctionnement du véhicule est expliqué sur les figures 3 et 4. Sur la figure 3 le véhicule est représenté schématiquement en position d'arrêt. C'est-à-dire portes ouvertes et posé sur le sol sur les extrémités 3c des pattes 3b . Cette position a été obtenue par la rotation des éléments 3 autour des axes 2. rotation dans le sens inverse des aiguilles d'une montre pour les roues situées à gauche de la figure et dans le sens des aiguilles d'une montre pour les roues situées à droite de la figure. Sur la figure 3 les flèches D et E indiquent les rotations des éléments 3 au moment du démarrage, tandis que la flèche C indique le mouvement du châssis 1 au même moment.

Une fois les rotations définies ci-dessus terminées on obtient la position représentée à la figure 4. C'est-à-dire la position marche avec les portes fermées et verrouillées. Les flèches B indiquent le sens de rotation des roues 8 créant le déplacement du véhicule dans le sens de la flèche A.

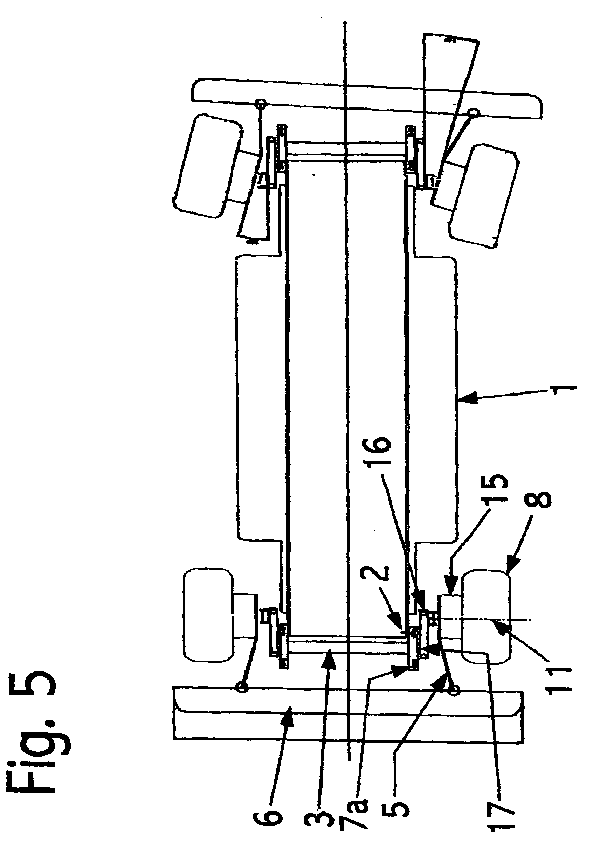

Sur la figure 5 on constate que dans cette forme d'exécution le véhicule est conçu de manière symétrique, mais on pourrait aussi concevoir un véhicule qui ne serait pas symétrique sans sortir du cadre de l'invention.

Dans une forme d'exécution il est prévu de réaliser un châssis en métal léger, par exemple en alliage d'aluminium, ayant une section transversale en forme d'omega anguleux de manière à pouvoir le munir de seuils en matière élastique venant en contact avec le sol lors des arrêts facilitant l'entrée des fauteuils roulant dans le véhicule.

Ce véhicule a par exemple été prévu d'être réalisé pour supporter un charge de 375 kg, c'est-à-dire environ cinq personnes et de se déplacer à une vitesse de 18 km/h.

## Revendications

1. Véhicule routier électrique, notamment automatique comportant quatre roues, une carrosserie présentant des portes et un dispositif permettant d'abaisser le plancher de la carrosserie jusqu'au sol en position d'arrêt et de la maintenir à une certaine distance du sol en position de déplacement ou de marche, où ledit dispositif est constitué de deux éléments (3) articulés respectivement à la partie avant et à la partie arrière de la carrosserie disposés selon des axes transversaux (2) relativement à la carrosserie comportant à chacune de leurs extrémités une roue (8), **caractérisée en ce que** chacune des roues soit actionnée par un moteur électrique disposé dans son moyeu et tournant autour d'axes parallèles (11) aux axes d'articulation des deux dits éléments de manière que lorsque les deux roues disposées à une extrémité de la carrosserie étant soumissent à un couple dans le sens (D) élèvent le plancher et l'abaissent en étant soumissent à un couple dans le sens opposé, tandis que les deux roues disposées à l'autre extrémité de la carrosserie élèvent et abaissent le plancher lorsqu'elles sont soumissent à un couple dans le sens (E) opposé des premières roues, ledit dispositif étant conçu de manière à ce que lesdites roues assurent le déplacement du véhicule lorsque le plancher est en position élevée.

2. Véhicule selon la revendication 1, **caractérisé en ce qu'**il comprend un châssis (1) sur lequel sont fixés la carrosserie et le dispositif destiné à abaisser et élever le plancher.

3. Véhicule selon la revendication 2, **caractérisé en ce que** le châssis (1) présente en coupe transversale un section en oméga comportant aux extrémités des branches des pieds destinés à venir en contact avec le sol dans la position arrêt du véhicule.

4. Véhicule selon la revendication 1, **caractérisé en ce que** la carrosserie (18) est constituée d'une coque à laquelle est fixé le dispositif destiné à abaisser et élever le plancher.

5. Véhicule selon l'une des revendications 1 à 4, **caractérisé en ce que** les portes sont fixées sur des barres (7a) elles mêmes fixées aux dits éléments (3) de manière que lesdites portes (7) se déplacent dans un plan vertical parallèle à l'axe longitudinal de la carrosserie (18) lorsque le plancher s'élève ou s'abaisse, ledit dispositif maintenant les portes ouvertes en position d'arrêt et fermées en position de marche et assurant par le blocage (7b) des portes en position fermées le maintien du plancher en position élevée.

6. Véhicule selon l'une des revendications 1 à 5, **caractérisé en ce que** les roues (8) sont fixées sur lesdits éléments (3) par des suspensions élastiques (17).

7. Véhicule selon l'une des revendications 1 à 6, **caractérisé en ce que** les roues sont montées mobiles autour d'axes verticaux afin de pouvoir assurer le guidage du véhicule.

## Patentansprüche

1. Elektrisches, insbesondere automatisches Straßenfahrzeug, mit vier Rädern, einer Karosserie, die Türen und eine Vorrichtung aufweist, die das Absenken des Fußbodens der Karosserie bis auf den Boden in eine Ruheposition und die Aufrechterhaltung eines bestimmten Abstandes von dem Boden in einer Verlagerungs- oder Fortbewegungsposition ermöglicht, wobei die Vorrichtung aus zwei Elementen (3) besteht, die jeweils an dem vorderen Teil und an dem hinteren Teil der Karosserie entsprechend Querachsen (2) im Verhältnis zu der Karosserie gelenkig gelagert sind, wobei sie jeweils an ihren äußersten Enden ein Rad umfassen,
**dadurch gekennzeichnet, dass** jedes der Räder (8) durch einen Elektromotor betätigt wird, der in seiner Nabe angeordnet ist und sich um Achsen (11) dreht, die parallel zu den Gelenkachsen der zwei genannten Elemente verlaufen, so dass sie dann, wenn die zwei an einem äußersten Ende der Karosserie angeordneten äußersten Ende der Karosserie angeordneten Räder einem Drehmoment in Richtung (D) ausgesetzt werden, den Fußboden anheben und ihn absenken, indem sie einem Drehmoment in der entgegengesetzten Richtung ausgesetzt werden, während die zwei an dem anderen äußersten Ende der Karosserie angeordneten Räder den Fußboden anheben und absenken, wenn sie einem Drehmoment in der Richtung (E) ausgesetzt werden, welches den ersten Rädern entgegengesetzt ist, wobei die Vorrichtung so konzipiert ist, dass die genannten Räder die Verlagerung des Fahrzeuges sicherstellen, wenn sich der Fußboden in angehobener Position befindet.

2. Fahrzeug nach Anspruch 1,
**dadurch gekennzeichnet, dass** es ein Gestell (1) umfasst, auf dem die Karosserie und die zum Absenken und Anheben des Fußbodens bestimmte Vorrichtung befestigt sind.

3. Fahrzeug nach Anspruch 2,
**dadurch gekennzeichnet, dass** das Gestell (1) einen Querschnitt in Form eines Omegas aufweist, welches an den äußersten Enden der Abzweigungen Füße umfasst, die dazu bestimmt sind, in der Ruheposition des Fahrzeuges mit dem Boden in Kontakt zu kommen.

4. Fahrzeug nach Anspruch 1,
**dadurch gekennzeichnet, dass** die Karosserie (18) aus einem Rumpf besteht, an dem die zum Absenken und Anheben des Fußbodens bestimmte Vorrichtung befestigt ist.

5. Fahrzeug nach einem der Ansprüche 1 bis 4,
**dadurch gekennzeichnet, dass** die Türen auf Stangen (7a) befestigt sind, die selbst auf den genannten Elementen (3) so befestigt sind, dass sich die genannten Türen (7) auf einer parallel zu der Längsachse der Karosserie verlaufenden Vertikalebene verlagern, wenn sich der Fußboden anhebt oder absenkt, wobei die Vorrichtung die Türen in der Ruheposition geöffnet und in der Fortbewegungsposition geschlossen hält und durch die Blockierung (7b) der Türen in der geschlossenen Position die Aufrechterhaltung des Fußbodens in der angehobenen Position sicherstellt.

6. Fahrzeug nach einem der Ansprüche 1 bis 5,
**dadurch gekennzeichnet, dass** die Räder (8) mittels elastischer Aufhängungen (17) auf den genannten Elementen (3) befestigt sind.

7. Fahrzeug nach einem der Ansprüche 1 bis 6, **dadurch gekennzeichnet, dass** die Räder um Vertikalachsen herum bewegbar angebracht sind, um die Führung des Fahrzeuges sicherstellen zu können.

## Claims

1. Electric road vehicle, particularly an automatic vehicle having four wheels, a body having doors and a device allowing the lowering of the floor of the body down to the ground in a stationary position and the maintaining of a given distance from the ground in a position of movement or motion, where the said device comprises two elements (3) articulated respectively to the forward and rearward part of the body and disposed according to axes (2) transverse relative to the body and carrying a wheel at each of their ends, **characterised in that** each of the wheels is acted on by an electric motor disposed in its hub and turning about axes (11) parallel to the articulation axes of the two said elements in such a way that the two wheels disposed on one end of the body are subjected to a couple in the direction (D) for raising the floor and for lowering are subjected to a couple in the opposite direction, where as the two wheels disposed at the other end of the body raise and lower the floor when they are subjected to a couple in the opposite direction (E) to the first wheels, the said device being constructed in such a way that the said wheels ensure the movement of the vehicle when the floor is in a raised position.

2. A vehicle according to claim 1, **characterised in that** it comprises a chassis (1) onto which the body and the device for lowering and raising the floor are fixed.

3. Vehicle according to claim 2, **characterised in that** the chassis (1) in cross section has an omega section carrying at its ends forked feet adapted to come into contact with the ground in the stationary position of the vehicle.

4. Vehicle according to claim 1, **characterised in that** the body (18) is constituted by a body shell to which the device for lowering and raising the floor is fixed.

5. Vehicle according to one of claims 1 to 4, **characterised in that** the doors are attached to bars (7a) themselves attached to the said elements (3) in such a way that said doors (7) are moved in a vertical plane parallel to the longitudinal axis of the body (18) when the floor is raised or lowered, the said device maintaining the doors open in the stationary position and closed in the position of movement, and ensuring by the locking device (7b) of the doors in the closed position the maintenance of the floor in the raised position.

6. Vehicle according to one of claims 1 to 5, **characterised in that** the wheels (8) are attached to the said elements (3) by elastic suspension (17).

7. Vehicle according to one of claims 1 to 6, **characterised in that** the wheels are mounted to be moveable about vertical axes so as to ensure the guidance of the vehicle.
